# EUROPEAN PATENT APPLICATION

(11) **EP 4 198 296 A1**
(43) Date of publication of application: **21.06.2023**
(21) Application number: 22200195.0
(22) Date of filing: 07.10.2022
(51) Int. Cl.: F02N 11/08, B60P 3/42

(54) **CONTROL SYSTEM FOR A TRUCK**

(30) Priority: 14.12.2021 DK PA202170618
(71) Applicant: HMK Bilcon A/S, 9260 Gistrup (DK)
(72) Inventor: NIELSEN, Erik Møldrup, 9270 Klarup (DK); HANSEN, Mads C. Julin, 9320 Hjallerup (DK)
(74) Representative: Guardian IP Consulting I/S

(57) **Abstract**

A control system for a truck is provided. The control system is configured to regulate a truck engine, which is configured to supply power to a pump in a dispensing system. The control system is further configured to receive one or more sensor signals from at least one sensor, to determine, based at least on the sensor signals received from at least one sensor, whether one or more predetermined criteria for the on/off status of the truck engine are fulfilled, and to regulate the truck engine according to the determination based at least on the received sensor signals. The one or more sensor signals comprises a pump sensor signal received from a pump sensor installed in, at or near the pump, where the pump sensor is configured to measure a pump sensor data parameter and to provide a pump sensor signal in response thereto. Also, a truck comprising the control system and a method of controlling a truck engine.

## Description

### TECHNICAL FIELD

The present disclosure relates to a control system for a truck that has an engine configured to supply power to a pump in a dispensing system, a truck comprising the control system, and a method of controlling a truck engine, which is configured to supply power to a pump in a dispensing system.

### BACKGROUND

When a truck engine is running, it is noisy, consumes fuel, produces exhaust gases, and is worn. To alleviate these drawbacks of a running vehicle engine, some vehicles have an idling stop system, which automatically switches the engine off at brief stops, such as at traffic lights.

However, for trucks, where one or more components on the truck chassis can be powered by the truck engine, it can be undesirable that the engine turns off the simply because the vehicle is at rest.

A truck used for transporting goods can, for example, be a rigid tank truck with a tank on a common chassis, or a tractor truck designed to connect to a trailer on which the tank sits. A dispensing system with a pump is used to move the goods from the tank to the intended delivery location and the pump can be powered by the truck engine. When the pump is powered by the truck engine, the truck engine may need to run at times where the truck is stopped and a simple idling stop system is inappropriate for such use and may even be an inconvenience.

Further, the simple idling stop system will only start the engine when receiving a signal to do so from either the ignition, or from a remote control system as described below.

Some trucks are configured with a remote control system that allows for turning the engine on or off using a remote control. Drawbacks of this setup are at least that it is a manual process, that it doesn't take the status of the truck and/or pump into consideration, and that it doesn't automatically reduce unnecessary idling of the engine.

There is thus a need for an improved control system for a truck that has an engine configured to supply power to a pump in a dispensing system.

It is an object to provide a truck comprising the improved control system.

It is a further object to provide an improved method of controlling a truck engine.

It is an object to provide a method of controlling a truck engine, which is configured to supply power to a pump in a dispensing system.

### SUMMARY

It is an object of some embodiments to solve or mitigate, alleviate, or eliminate at least some of the above or other drawbacks. In particular, it is desirable to automate, at least partly, the powering on or off of a truck engine and further to reduce the run-time of the truck engine, while taking into consideration the status of the pump powered by the truck engine.

In a first aspect is provided a control system for a truck, in a second aspect is provided a truck comprising a control system according to the first aspect, and in a third aspect is provided a method of controlling a truck engine. In the different aspects, the features having the same name are similar and therefore the descriptions and explanations of features in any aspect apply to those features in another aspect.

**In the first aspect**, a control system for a truck is provided. The control system is configured to regulate a truck engine, which is configured to supply power to a pump in a dispensing system. For example, from a fluid-transfer pump in a fluid-dispensing system. The control system is further configured to receive one or more sensor signals from at least one sensor, to make a first determination, based at least on the one or more sensor signals received from at least one sensor, whether one or more predetermined criteria for the on/off status of the truck engine are fulfilled, and to regulate the truck engine according to the first determination based at least on the received sensor signals. The one or more sensor signals comprises a pump sensor signal received from a pump sensor installed in, at or near the pump, the pump sensor being configured to measure a pump sensor data parameter and to provide a pump sensor signal in response thereto.

The truck may be a rigid tank truck, where a tank and a dispensing system is on a common chassis with the truck. The truck may be a tractor truck configured to connect to a trailer, such as a semi-trailer or a full trailer, on which a tank, such as a tank configured for holding fluids, feed or grain, is or can be positioned, and the dispensing system may be installed on either chassis (that of the tractor truck or of a trailer). A vehicular dispensing system is used in connection with e.g. rigid tank trucks, tank trailers, or stand-alone tank constructions, which have a tank and which are used to transport goods such as e.g. fluids, feed or grain on roads, rails, by water or by air. The dispensing system is used to move the goods in or out of the tank, for example to move the goods out of the tank so as to deliver it to an external tank after arrival at a delivery location.

A conduit system connects to the tank via a first conduit opening and is used to transport the goods from the tank towards a second conduit opening, or from the second conduit opening to the tank. The second conduit opening which will usually have some sort of coupling or connector to connect with e.g. a hose or pipe, etc.

Different types of goods may be dispensed using a vehicular dispensing system. For example, the goods may be fluids such as, e.g. oil, gasoline, methanol, ethanol, bio-fuels, other fluid fuels, such as mixes of fuels, etc., or feed, or grain.For example, the tank may be a fluid tank, i.e. a tank configured for holding a type of fluid, and the conduit system may be a fluid conduit system, which is configured to transport fluid to/from the fluid tank.

The one or more predetermined criteria for the on/off status of the truck engine are criteria, which, when fulfilled, indicate that the truck engine should be either running ("on") or not ("off"). Thus, the first determination is a decision on whether, according to the predetermined criteria, it is appropriate for the truck engine to be running or not. The control system will use at least the sensor signals received from one or more sensors to reach its decision, i.e. the control system may use both the data collected from the one or more sensors as well as further criteria in its determination. The control system may use further data in its determinations such as, but not limited to, data from further sensors and information about the truck or components installed on the truck or trailer chassis. The control system may process and store any data it receives and use derived data in its determinations, such as how a sensor data parameter evolves over time.

The control system may be configured to detect whether the truck engine is running and may be configured to use this information in its determinations. Detecting whether the truck engine is running may be a continuous or intermittent monitoring of the truck engine's on/off status.

The at least one sensor each generate a sensor signal, which the control system can receive and thereby collect data from the sensor. The data collected by the control system may be any type of data such as data representing numerical values, or a state. The data may be processed by the sensor before being received by the control system, or processed by the control system after being received. Each sensor may provide one or more data parameters and/or one or more types of data parameter. That a sensor is installed in, at or near another component means that at least the sensory part of the sensor is positioned in, at or near the component such that it is able to measure a property of, or relating to, the component.

The control system uses at least pump sensor data in it's first determination. The pump sensor data may comprise pump power status, i.e. may indicate whether the pump is running or not, and/or one or more pump settings such as suction pressure, discharge pressure, flow, pump speed, where the pump settings may indicate indirectly whether the pump is running.

In some embodiments, the the truck engine is configured to supply power to a vane pump, and the control system is configured to receive the pump sensor signal from a pump sensor configured to measure a pump sensor data parameter from a vane pump.

A vane pump may be a fluid-transfer pump, as used in fluid-dispensing systems, or an air compressor, as used in dry-goods-dispensing system. The control system may be configured to work with either type of vane pump or both types. Thus, in some embodiments, the control system (1) is further configured to receive the pump sensor signal from a pump sensor (5) configured to measure a pump sensor data parameter from a fluid-transfer pump (3), and/or wherein the control system (1) is further configured to receive the pump sensor signal from a pump sensor (5) configured to measure a pump sensor data parameter from an air compressor (3).

In addition to the pump sensor data, the control system may receive sensor signals from other sensors and use these in its determination. For example, the one or more sensor signals may further comprise sensor signals received from one or more sensors configured to measure one or more of: engine on/off status, engine RPMs, engine control system status, engine temperature, gearbox status, air supply pressure, battery voltage of the truck battery, ambient temperature, and/or flow of a goods within the dispensing system. Additionally, relevant sensor data that may be used by the control system is any data on engine health or data that indicates whether the truck engine is currently doing diagnotics, self cleaning or other task, which should not be interrupted.

The air supply pressure measured is the pressure of the compressed air used for actuation such as brakes, suspension, automated valves as well as other equipment such as hose reel engines and fuel pump pressure regulator valves. If the air supply pressure drops too low the valves will not open or close as intended. While the truck engine is running air is generated, and thus, if the air supply pressure drops too low this can be remedied by having the truck engine run until the air supply pressure is satisfactory. Therefore, the air supply pressure may be used by the control system in its detemination.

Thus, in some embodiments, the one or more sensor signals further comprises a truck engine sensor signal received from an engine sensor installed in, at or near the truck engine, the engine sensor being configured to measure a truck engine data parameter, such as engine temperature, and to provide a truck engine sensor signal in response thereto. The truck engine sensor data may comprise engine power status, i.e. may indicate whether the truck engine is running or not.

In some embodiments, the one or more sensor signals further comprises a gearbox sensor signal received from a gearbox sensor installed in, at or near the gearbox, the gearbox sensor being configured to measure a gearbox data parameter and to provide a gearbox sensor signal in response thereto. Ideally, the gearbox should be idle both when the truck engine is stopped (to avoid interruptions) and when the truck engine is started (for safety). Thus, a relevant gearbox data parameter is the the gearbox status such as whether it is engaged either with the drivetrain or power take off.

In some embodiments, the dispensing system further comprises a conduit system, which is configured to transport goods between a first conduit opening and a second conduit opening, where the first conduit opening is configured to connect to a tank. The pump is connected to the conduit system and is configured to pump goods between the first and second conduit openings. In some embodiments, the one or more sensor signals further comprises a first conduit sensor signal from a first conduit sensor configured to measure a first conduit data parameter and to provide a first conduit sensor signal in response thereto. In some embodiments, the first conduit data parameter is measured at a first conduit measurement position downstream from the first conduit opening and upstream from the pump. The exact structure of a conduit system will be designed for the task at hand and therefore depend on a number of factors such as, but not limited to, the type of goods to be dispensed, the size of the system, regulatory demands, etc. Therefore, the design of the conduit system may vary greatly. The first conduit measurement position being downstream from the first conduit opening and upstream from the pump means that any goods flowing between the first conduit opening and the pump will pass the measurement position.

In some embodiments, the dispensing system is a fluid-dispensing system, the tank is a fluid tank, the pump is a fluid-transfer pump, the conduit system is a fluid conduit system configured to transport fluid between the first and second conduit opening, and the conduit sensor(s) are fluid conduit sensor(s).

In some embodiments, the first conduit sensor is an optical sensor, a mechanical sensor, a thermistor, a conductivity sensor, a flow sensor, a pressure sensor, or a proximity sensor. A mechanical sensor may be a float level sensor. Preferably, the first conduit sensor will provide a sensor signal that allows the control system to determine the presence of and/or estimate the amount of goods that is in the conduit system at or near the first measurement position. Thus, in some embodiments, the control system is further configured to interpret the first conduit data to arrive at a measure of the presence of and/or amount of goods present in the conduit system at the first conduit measurement position.

An optical sensor has the advantages that it affects the flow minimally, and can be designed for measurements on one or more specific goods, such as one or more specific fluids. Further, the optical sensor in a particular type of proximity-sensing arrangement directly provides a measure of the presence of and amount of goods as the goods passes through an emitted light beam and reflects light, which is detected by a receiver. However, other types of sensors, such as other types of proximity sensors, which can detect the type of goods can be used to provide this type of input for the control system.

The control system may be a centralised system, where all or most of the hardware parts making up the control system, except for e.g. wiring, are located close to each other, or it may be, at least to some degree, at decentralised system, wherein the hardware parts are located further apart from each other. For example, part of the control system may be comprised in the tractor truck chassis and part of it in the trailer chassis. Means for processing data, such as the conduit data, may be located physically at or near the sensor that generated the data or even integrated into the sensor.

Once a determination has been made of whether it is appropriate for the engine to be running based on the one or more predetermined criteria, the control system regulates the truck engine according to that determination. The regulation may be one of: arranging for the truck engine to maintain its current power status, i.e. to remain on or off, or arranging for the truck engine to turn on or off, depending on its current status and the first determination made.

In some embodiments, the control system is further configured to make a second determination, based at least on the one or more sensor signals received from at least one sensor, where the second determination is whether one or more predetermined criteria for the on/off status of the pump are fulfilled. After the second determination has been made of whether it is appropriate for the engine to be running based on the one or more predetermined criteria, the control system regulates the fluid-transfer pump according to the second determination. The regulation of the pump may be one of arranging for the pump to maintain its current power status, i.e. to remain on or off, and/or increasing or decreasing pumping power, and/or reversing pumping action, and/or arranging for the pump to turn on or off, depending on its current status and the determination made. The processing to arrive at the two determinations may depend on each other, but the determinations are separate in that the control system may arrive at a decision that the pump should be turned off, whereas the truck engine should keep running.

Regulating the operation of the pump based at least in part on measurements from a conduit sensor placed upstream from the pump allows for an optimized use of the pump by not running it unnecessarily or running it at a lower power.

The first and second determination may be made in any order, and each may depend on the outcome of the other determination. In some instances it will make more sense that the second determination is made before the first determination as the second determination may have the outcome that the pump is turned off, which means that the truck engine no longer has to power it, which may affect the outcome of the decision whether the truck engine should continue to run. Thus, the regulation of the may synergize with the regulation of the truck engine.

To have the best performance, the first conduit measurement position may advantageously be chosen such that it is placed above the port inlet, where the fluid enters the pump and below the first conduit opening such that the fluid will be aided by gravity to flow towards the pump, i.e. above and below are given with respect to gravity. Thus, in some embodiments, the pump comprises a port inlet and the first measurement position is at a location that is gravitationally lower than the first conduit opening and gravitationally higher than the port inlet of the pump.

Regulating the pump may entail one or more of: maintaining the current power status, i.e. to remain on or off, starting or stopping pumping, increasing or decreasing pumping power, and/or reversing pumping action. For example, the control system may decide to arrange for the pump to cease or reduce its pumping power if the first conduit data parameter indicates that the amount of goods at the first conduit measurement position is below a predetermined minimum level.

A second conduit sensor may be installed in the dispensing system to provide a second measurement on the conduit system, which the control system can use in its regulation of the truck engine and/or of the pump. Thus, in some embodiments, the dispensing system further comprises a second conduit sensor configured to measure at least a second conduit parameter at a second conduit measurement position and further configured to provide a second conduit sensor signal in response thereto. In some embodiments, the one or more sensor signals further comprises the second conduit sensor signal. In some embodiments, the second conduit data parameter is measured at a second conduit measurement position downstream from the first conduit opening and upstream from the pump. In some embodiments, the second conduit data parameter is measured at a second conduit measurement position downstream from the first conduit opening and upstream from the first conduit sensor.

The second conduit sensor may be the same type as the first conduit sensor, or a different type of sensor. For example, the second conduit sensor may be an optical sensor, a mechanical sensor, a thermistor, a conductivity sensor, a flow sensor, a pressure sensor, or a proximity sensor. One or more sensors in addition to the first sensor could provide for the control system to know even earlier whether the amount of goods passing through the dispensing system is diminishing. For example, the first and/or second conduit sensor could be a type of sensor, which detects vibration in the conduit system, e.g. a sensor that can be used for machine vibration monitoring. For example, a vibration sensor could be used in a fluid conduit systemand an increase in vibrations could indicate that air instead of liquid is passing through the fluid conduit system.

In some embodiments, the control system is further configured to notify a user and/or a user interface based on the one or more sensor signals received from the at least one sensor, e.g. making a notification about the results of measurements from any of the at least one sensors. In some embodiments, the control system is further configured to notify a user and/or a user interface of any determination and/or regulation made.

Notifying the user directly or via a user interface allows for the user to take action based on the notification such as restarting the pump, checking the tank, stopping the dispensing of fluid, etc. For example, after the control system receives the pump sensor signal, and possibly other sensor signals, it may alert a user by one or more notifications, such as a visual, an audible or a tactile notification, or via a user interface.

**In the second aspect** is provided a truck comprising a truck engine configured to supply power to a pump in a system, where the truck further comprises the control system according to the first aspect.

**In the third aspect** is provided a method of controlling a truck engine that is configured to supply power to a pump in a dispensing system comprising a pump sensor installed in, at or near the pump, where the pump sensor is configured to measure a pump sensor data parameter and to provide a pump sensor signal in response thereto. The method comprises the steps of:
- receiving one or more sensor signals from at least one sensor,
- making a first determination, based at least on the one or more sensor signals received from the at least one sensor, whether one or more predetermined criteria for the on/off status of the truck engine are fulfilled, and
- regulating the truck engine according to the determination based at least on the received sensor signals,
   wherein the one or more sensor signals comprises the pump sensor signal.

In some embodiments, the pump is a vane pump.

In some embodiments, the pump (3) is a fluid-transfer pump or an air compressor.

In some embodiments, the one or more sensor signals further comprises a truck engine sensor signal received from an engine sensor installed in, at or near the truck engine, the engine sensor being configured to measure a truck engine data parameter and to provide a truck engine sensor signal in response thereto.

In some embodiments, the one or more sensor signals further comprises a gearbox sensor signal received from a gearbox sensor installed in, at or near the gearbox, the gearbox sensor being configured to measure a gearbox data parameter and to provide a gearbox sensor signal in response thereto.

In some embodiments, the one or more sensor signals further comprises sensor signals received from one or more sensors configured to measure one or more of: engine on/off status, engine RPMs, engine control system status, engine temperature, gearbox status, air supply pressure, battery voltage of the truck battery, ambient temperature, and/or flow of goods within the fluid-dispensing system.

In some embodiments, the dispensing system further comprises a conduit system, which is configured to transport goods between a first conduit opening and a second conduit opening, where the first conduit opening is configured to connect to a tank, which is configured to hold the goods. The pump is connected to the conduit system and is configured to pump goods between the first and second conduit openings. In some embodiments, the one or more sensor signals further comprises a first conduit sensor signal from a first conduit sensor configured to measure a first conduit data parameter and to provide a first conduit sensor signal in response thereto. In some embodiments, the first conduit data parameter is measured at a first conduit measurement position downstream from the first conduit opening and upstream from the pump.

In some embodiments, the first conduit sensor is an optical sensor, a mechanical sensor, a thermistor, a conductivity sensor, a flow sensor, a pressure sensor, or a proximity sensor. A mechanical sensor may be a float level sensor. Preferably, the first conduit sensor will provide a sensor signal that allows the control system to determine the presence of and/or estimate the amount of goods that is in the conduit system at or near the first measurement position. Thus, in some embodiments, the control system is further configured to interpret the conduit data to arrive at a measure of the presence of and/or amount of goods present in the conduit system at the first conduit measurement position.

In some embodiments, the method further comprises making a second determination, based at least on the one or more sensor signals received from at least one sensor, whether one or more predetermined criteria for the on/off status of the pump are fulfilled, and regulating the pump according to the second determination based at least on the received sensor signals.

In some embodiments, the dispensing system further comprises a second conduit sensor configured to measure at least a second conduit parameter at a second conduit measurement position and further configured to provide a second conduit sensor signal in response thereto. In some embodiments, the one or more sensor signals further comprises the second conduit sensor signal. In some embodiments, the second conduit data parameter is measured at a second conduit measurement position downstream from the first conduit opening and upstream from the pump. In some embodiments, the second conduit data parameter is measured at a second conduit measurement position downstream from the first conduit opening and upstream from the first conduit sensor.

In some embodiments, the method further comprises notifying a user and/or a user interface based on the one or more sensor signals received from the at least one sensor.

The method of controlling a truck engine may be implemented using the control system of the first aspect.

A data processing system may implement the steps of the method.

Additional features and advantages will be made apparent from the following detailed description with reference to the accompanying drawings.

### BRIEF DESCRIPTION OF THE FIGURES

In the following, exemplary embodiments are described in more detail with reference to the appended drawings, wherein:
Figure 1 is a schematic drawing of a control system for a truck according to some embodiments;
Figure 2 is another schematic drawing of a control system for a truck according to some embodiments;
Figure 3 is a schematic drawing of an exemplary vehicular fluid-dispensing system;
Figure 4 is a schematic drawing of part of a vehicular fluid-dispensing system and a control system for a truck according to some embodiments;
Figure 5 is another a schematic drawing of part of a vehicular fluid-dispensing system and a control system for a truck according to some embodiments;
Figure 6A is a flow chart of the method of controlling a truck engine according to some embodiments;
Figure 6B is a flow chart of the method of controlling a truck engine according to some embodiments.

### DETAILED DESCRIPTION

Embodiments of the present disclosure will be described and exemplified more fully hereinafter with reference to the accompanying drawings. The description disclosed herein can, however, be realized in many different forms and should not be construed as being limited to the embodiments set forth herein. The skilled person will understand that the accompanying drawings are schematic and simplified for clarity and therefore merely show details which are essential to the understanding of the invention, while other details have been left out. Like reference numerals refer to like elements throughout. Like elements will therefore not necessarily be described in detail with respect to each figure.

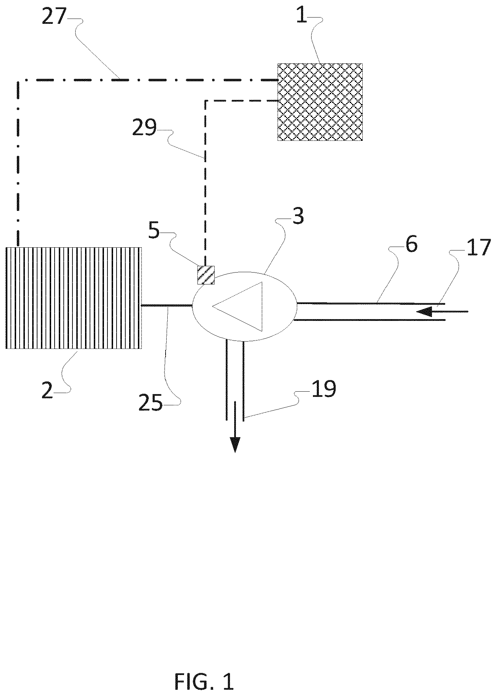

**Figure 1** is a schematic drawing of a control system 1 for a truck, where the control system 1 can regulate the truck engine 2, which supplies power to a pump 3 in a dispensing system. The control system 1 sends commands to, and therewith regulates, the truck engine 2 through a communication link 27 (dash-dot line). The truck may have an idling stop system built into its chassis by the manufacturer, and the rest of the control system 1 can then be added later on top of this functionality and make use of the built-in idling stop system as part of the regulation of the truck engine 2.

Between the truck engine 2 and the fluid-transfer pump 3 is a power connection 25 (full line) through which the truck engine 2 supplies power to the pump 3.

The dispensing system has a conduit system 6, comprising e.g. piping, tubes, etc., which is configured to transport goods from a first conduit opening 17 to a second conduit opening 19. If the first conduit opening 17 is connected to a tank, goods from the fluid tank may flow towards the second conduit opening 19 or vice versa. The drawing merely illustrates the connections schematically as the structure of a conduit system and the components around it may vary significantly from one dispensing system to another.

The pump 3 is connected to the conduit system 6 and, when pumping, acts to move goods received at the first conduit opening 17 towards the second conduit opening 19 or vice versa. The pump 3 may be any type of pump suitable for the system requirements such as the type of goods to be moved, e.g. fluid, grain, feed, etc., and dimensions of the conduit system. A pump usually has a pump port inlet and a pump port outlet, which are also called a suction and discharge port on non-reversible pumps. When the pump is pumping normally, the fluid moving towards the pump 3 will enter the pump port inlet and exit the pump port outlet. In some pumps, the pump direction can be reversed.

A pump sensor 5 is positioned in, at or near the pump 3 to measure a pump sensor data parameter such as pump power status, and/or one or more pump settings such as suction pressure, discharge pressure, flow, pump speed. The pump sensor 5 then generates a pump sensor signal, based on the pump sensor data parameter, which is transmitted to the control system 1 via a sensor communication link 29 (dashed line) between the pump sensor 5 and the control system 1. The pump sensor signal received by the control system 1 is used by the control system 1 to make a first determination, wherein the control system determines whether one or more predetermined criteria for the on/off status of the truck engine 2 are fulfilled, i.e. the control system 1 makes a decision on whether it is appropriate for the truck engine 2 to be running or not.

After making the first determination, the control system regulates the truck engine 2 accordingly such that the truck engine is either turned on (or remains on) or turned off (or remains off).

The control system 1, which acts as an automation, may be restricted on when it is allowed to control the chassis, i.e. when it is allowed to regulate the engine (and possibly the pump). For example, the control system may be configured such that it is allowed to control the engine when the ignition is on, the parking brake engaged, and the gearbox disengaged. Additionally the control system may be configured with a type of master switch, which allows a user to enable or disable the control system.

When enabled the control system 1 may continuously evaluate the relevant input from the sensor(s) to determine if the engine should be on or off, and then enforce this on the chassis by telling it to either start or stop its engine if the engine status is not correct, or to maintain the current status of the engine.

Thus, depending on the configuration of the truck and which sensors are available to provide sensor signals, the control system 1 may be configured to regulate the truck engine, while taking into account the status of both chassis (e.g. engine, gearbox, battery, pneumatics, etc.), environment (e.g. temperature, humidity, pressure, etc.) and the system installed on the chassis (pump, conduit system, tank, etc.)

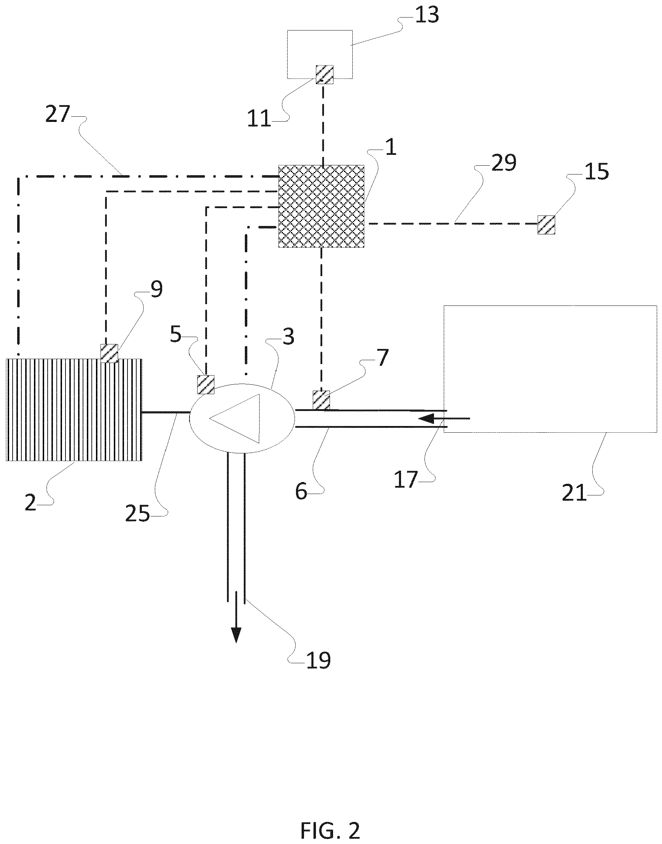

**Figure 2** is another schematic drawing of a control system 1 for a truck with components like those in figure 1. Additionally, figure 2 shows a tank 21 configured to hold a goods of a particular type, a first conduit sensor 7, an engine sensor 9, a gearbox 13, a gearbox sensor 11, and an environmental sensor 15.

The first conduit sensor 7 is installed so as to measure at a first measurement position downstream from the first conduit opening 17 and upstream from the pump 3. The first conduit sensor 7 measures a first conduit data parameter, and possibly further parameters, and provides a first conduit sensor signal in response to the measurement. The first conduit sensor signal is sent to the control system 1, which is in communication with the first conduit sensor 7 via a sensor communication link 29 (dashed line). The first conduit sensor 7 could, for example, be an optical sensor, a mechanical sensor, a thermistor, a conductivity sensor, a flow sensor, a pressure sensor, or a proximity sensor. Preferably, it will provide a sensor signal that allows for a determination of the presence of and/or an estimation of the amount of goods that is in the conduit system 6 at the position, where the first conduit sensor 7 measures.

For example, in a particular setup, the tank 21 could be a fluid tank configured to hold a particular fluid or type of fluid, and the first conduit sensor 7 configured to provide a sensor signal that allows for a determination of the presence of and/or an estimation of the amount of fluid that is in the conduit system 6 at the measurement position of the first conduit sensor.

The engine sensor 9 is installed in, at or near the truck engine 2 to allow for a measurement of one or more truck engine data parameters. The engine sensor 9 then provides a truck engine sensor signal in response to the measurement of the truck engine data parameter. The control system 1 receives the truck engine sensor signal via a sensor communication link 29 (dashed line) between the two. For example, the truck engine data parameter could be a temperature of the truck engine 2.

The gearbox sensor 11 is installed in, at or near the gearbox 13 of the truck to allow for a measurement of one or more gearbox data parameters. The gearbox sensor 11 then provides a gearbox sensor signal in response to the measurement of the gearbox data parameter. The control system 1 receives the gearbox sensor signal via a sensor communication link 29 (dashed line) between the two.

The environmental sensor 15 measures a data parameter relating to the environment near the truck such as ambient temperature, humidity, etc. The control system 1 receives the environmental sensor signal from the environmental sensor 15 via a sensor communication link 29 (dashed line) between the two.

The control system can be configured to receive sensor signals from other relevant sensors in addition to the four sensors shown in figure 2. The communication links 29 between the control system 1 and sensors may each be wired, or wireless, or a combination.

After receiving sensor signals from the sensors, the control system evaluates, based on the sensor signals, whether the truck engine 2 should be running or not. The evaluation may for example be done by comparing the data from the sensor signals to one or more lists of criteria. The criteria are predetermined and could for example include whether the fluid-transfer pump 3 is running, what the engine temperature or ambient temperature is, the battery voltage, etc. The criteria will depend at least partly on the chassis, i.e. on which components are present e.g. on the rigid tank truck chassis, or on the tractor truck chassis and/or trailer chassis. The criteria may at least partly develop as a result of using machine learning.

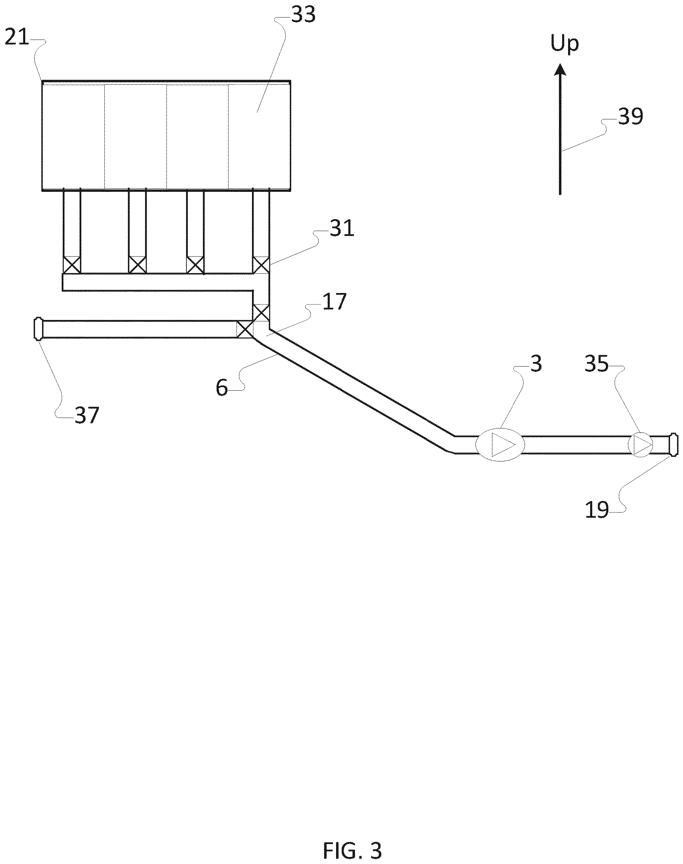

**Figure 3** is a schematic drawing of an exemplary fluid-dispensing system with a fluid-transfer pump that is powered by a truck engine, and wherein the truck engine is regulated by a control system 1. A fluid conduit system 6 is configured to transport a fluid from a fluid tank 21 to a second conduit opening 19. The fluid tank 21 has a plurality of compartments 33, which each connect to the fluid conduit system 6. A plurality of valves 31 are placed at junctions in the fluid conduit system 6 to allow for selection of which compartment to drain fluid from and for routing of fluid within the conduit system 6.

A secondary connection point 37 provides a connection to an external fluid reservoir such as e.g. a tank trailer towed behind, another rigid tank/trailer tank or other type of tank. In such a setup a fluid-transfer pump 3 can be used to transfer fluid from the external fluid reservoir to the second conduit opening 19 of the fluid-dispensing system.

The first conduit opening 17 is placed gravitationally higher than the port inlet on the fluid-transfer pump 3. Fluid in the conduit system 6 therefore moves from the first conduit opening 17 and towards the port inlet due to gravity. Arrow 39 indicates the vertical direction.

Upstream from the second conduit opening 19 and downstream from the fluid-transfer pump 3, an optional gauge 35 measures the amount of fluid that has been dispensed. Optionally, the pump may have an outlet through which the fluid flows back towards the fluid tank 21 to allow for self-loading e.g. from the external inlet provided by the secondary connection point 37. The flow back towards the fluid tank 21 may also be gauged.

The exemplary system shown in figure 3 could instead be configured for a different type of goods other than fluid.

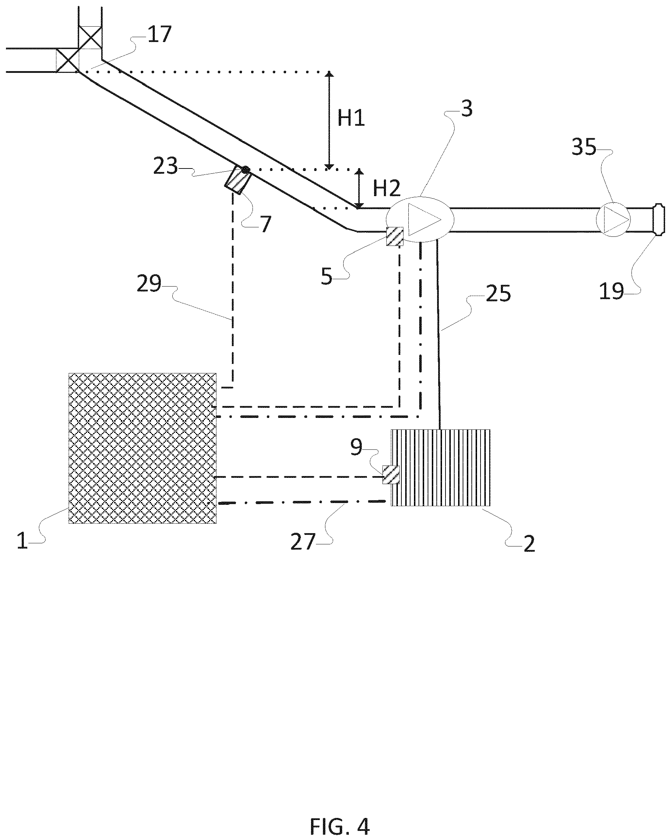

**Figure 4** is a schematic drawing of a control system 1 for a truck and part of a vehicular fluid-dispensing system, which is similar in construction to the fluid-dispensing system shown in figure 3.

An optical sensor 7 measures the amount of fluid in the fluid conduit system 6 at a first fluid conduit measurement position 23, which is downstream from the first conduit opening 17 and upstream from the fluid-transfer pump 3. To optimize the measurements made by the optical sensor 7, the first measurement position 23 is located such that it is gravitationally lower than the first conduit opening 17 by a vertical distance H1 and gravitationally higher than the port inlet of the fluid-transfer pump 3 by a vertical distance H2. An arrow 39 indicates the vertical direction.

The best performance will be achieved, when the first measurement position 23 is located such that the fluid flowing towards the pump 3 will always pass the measurement point 23. Additionally, the measurement point 23 should be located and configured such that fluid will flow past it and not remain at the measurement point 23.

While the fluid-transfer pump 3 is running and moving fluid towards the second conduit opening 19, the optical sensor 7 can detect when the amount of fluid passing the first measurement position 23 diminishes.

The optical sensor 7 generates a first fluid conduit sensor signal in response to its measurement indicating the amount of fluid in the fluid conduit system at the first fluid conduit measurement position 23 upstream from the fluid-transfer pump 3 and downstream from the first conduit opening 17. After generating the first fluid conduit sensor signal, the first fluid conduit sensor 7 transmits the sensor signal to the control system 1 via a communication link 29 (dashed line).

The control system 1 can regulate the operation of the truck engine 2 by sending commands to the truck engine 2 via a communication link 27 (dash-dot line) between the two, and further, the control system 1 can regulate the operation of the fluid-transfer pump 3 via another communication link 27 (dash-dot line) between the two. Alternatively, the control commands for the truck engine 2 and fluid-transfer pump 3 may be transmitted via the same communication links 29 (dashed lines) as the sensor signals from the engine sensor 9 and pump sensor 5, respectively.

The command system 1 further receives a truck engine sensor signal from a truck engine sensor 9, which provides data related to the truck engine, such as temperature of a part of the engine.

A pump sensor 5 sends data related to the pump 3 such as e.g. operational status, pumping setting, error messages, etc. to the control system 1 via a communication link 29 (dashed line) between the pump sensor 5 and the control system 1. The communication links 29 (dashed lines) between the control system 1 and other components may each be wired, or wireless, or a combination.

The control system 1 thus receives a plurality of sensor signals via communications links 29 (dashed lines) and then uses the received sensor signals to make two determinations: whether it is appropriate for the fluid-transfer pump 3 to be running and whether it is appropriate for the truck engine to be running. Following these determinations, the control system 1 regulates the truck engine 2 and fluid-transfer pump 3 accordingly.

When the control system 1 receives data from the sensors 5, 7, 9 it may process the sensor signals before making a determination of a suitable way to regulate the truck engine 2 and pump 3 based on the sensor signals.

Regulating the fluid-transfer pump 3 may comprise changing an operation of the pump and in some instances be to keep the pump operation as it currently is. For example, if the data from the optical sensor 7 indicates that the flow of fluid past the first fluid conduit measurement point 23 is diminishing, the control system 1 may arrange for the fluid-transfer pump 3 to reduce its pumping power. If the control system 1 determines that the amount of fluid at the first fluid conduit measurement position 23 is below a predetermined minimum level, it may arrange for the pump 3 to stop running, or at least reduce its pumping power.

If the control system 1 determines that the fluid-transfer pump 3 is to be turned off, it may determine, based in part on the pump 3 being turned off, that the engine 2 should also turn off when the pump 3 no longer requires power. However, as the truck engine 2 may be needed to power other units or if it for other reasons is inappropriate for the engine 2 to power down, the control system 1 may decide that the truck engine 2 will keep running while the pump 3 is turned off. When turning off the fluid-transfer pump 3, the control system 1 may arrange to switch off a PTO (Power Take-off) supplying power to the pump 3 or to disengage the pump from the PTO. Turning off the fluid-transfer pump 3, when little or no fluid is detected at the first fluid conduit measurement position 23 will prevent the pump 3 from running for an extended period of time with no fluid being moved through the it.

Alternatively, the control system 1 can reduce the pumping power of the fluid-transfer pump 3. For example, if a series of first fluid conduit sensor signals indicate that less and less fluid is detected at the first measurement position 23, the pumping power of the fluid-transfer pump 3 can be gradually decreased. Such an advanced control of the fluid-transfer pump 3 can save the pump 3 from running/pumping needlessly and thus save energy. Additionally, running dry is hard on the fluid-transfer pump 3, i.e. when no or very little fluid passes it and instead air, which does not lubricate and cool as well, finds its way to the pump port inlet. Avoiding having extended periods of time, where the fluid-transfer pump 3 runs dry, will reduce pump wear and may result in fewer breakdowns and longer life of the pump 3.

The fluid-transfer pump 3 is powered via electrical connection 25, by the engine 2 of a tank truck or of a tractor vehicle connected to a tank trailer. Thus, reducing power or pumping time means that the truck engine 2 will have to deliver less energy to the pump 3. Sometimes, powering the fluid-transfer pump 3 is the only reason the engine 2 is running, while the truck or tractor vehicle is stationary, and in these cases, stopping the pump 3 sooner also allows for the engine 2 to be turned off sooner. Thus, advantageously, the control system 1 as disclosed herein provides an automated regulation of the truck engine 2, which results in the engine being on for shorter time than if it has to be turned off manually, while also reducing inconvenience for the driver.

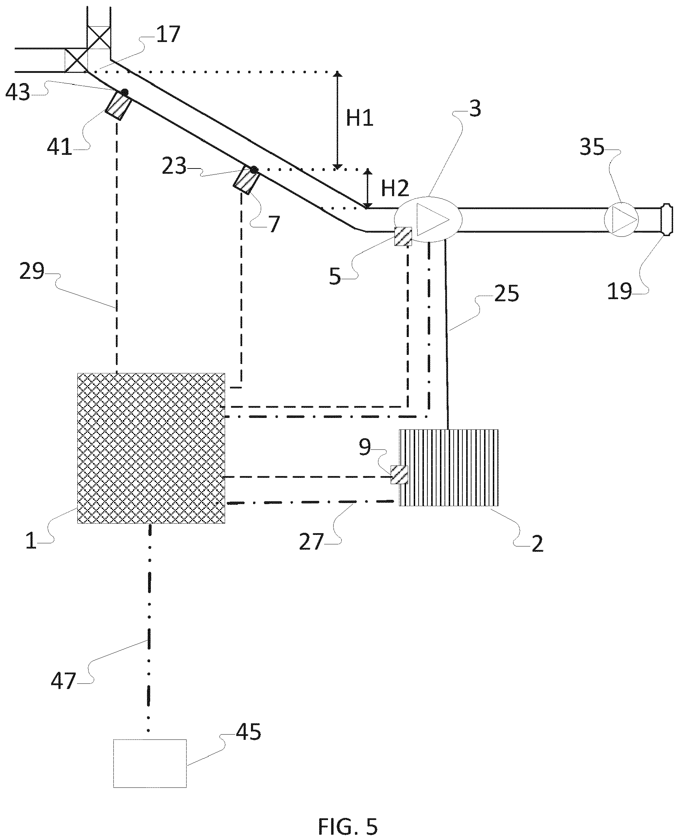

**Figure 5** is a schematic drawing of a control system for a truck and part of a vehicular fluid-dispensing system. An optical sensor 7 measures the amount of fluid in the fluid conduit system 6 at a first fluid conduit measurement position 23, which is downstream from the first conduit opening 17 and upstream from the fluid-transfer pump 3. The optical sensor 7 generates a first fluid conduit sensor signal in response to its measurement and transmits the sensor signal to the control system 1 via a communication link 29 (dashed line) between the sensor 7 and control system 1.

In addition, a second fluid conduit sensor 41 measures a second fluid conduit data parameter at a second fluid conduit measurement position 43 downstream from the first conduit opening 17 and upstream from the first fluid conduit sensor 7. The second fluid conduit sensor 41 generates a second fluid conduit sensor signal in response to the measurement of the second fluid conduit data parameter and transmits the sensor signal to the control system 1 via a communication link 29 (dashed line) between the sensor 41 and control system 1. The second fluid conduit sensor 41 may be a proximity sensor, such as an optical sensor, which, together with the first fluid conduit sensor 7, provides the possibility for a more refined conclusion from the measurements. This allows for the control system 1 to have better data to act on when making its determinations to regulate the truck engine 2 and the fluid-transfer pump 3.

The second fluid conduit sensor 41 could be a type of sensor that detects vibration in the fluid conduit system indicative of air passing through the system as this could also provide relevant data for the control system 1 to base its determinations on. For example, if it is detected by the second fluid conduit sensor 41 that air is passing through the fluid conduit system 6, the control system 1 can use this data together with the data from the first fluid conduit sensor, and data from the pump 5, to regulate the fluid-transfer pump 3 and thereby improve its performance.

In the embodiment shown in figure 5, the first and second fluid conduit sensors 7, 41 are shown as being connected to the control system 1 via separate communication links 29 (dashed lines), but the two sensors 7, 41 may alternatively, or additionally, have a communication link 29 to each other (not shown). If linked to each other, it may be that only one of the two sensors is directly connected to the control system 1 via a communication link 29 or that the sensors share a common communication link 29 to the control system 1. Any of the communication links 29 (dashed lines) may be wired, or wireless, or a combination.

The control system 1 further has a GUI communication link 47 (dot-dot-dashed line) to a user interface 45 to which it can send data relating to the results of measurements from any of the sensors and/or any other information the control system 1 may have. The control system 1 may also present the actions it has taken or intends to take, such as starting/stopping the truck engine 2, increasing/reducing the pumping power, starting/stopping the pump 3, etc. An operator, such as the driver, can read the data presented and may also be alerted by the user interface through e.g. one or more visual alerts such as blinking lights, one or more audible sounds, and/or one or more tactile notifications, which could be felt for example by the operator holding the user interface. In this way, the operator can be kept updated on the results of measurements and regulations performed by the control system 1. The operator may then act on these notifications and, if deemed necessary, possibly override the action of the control system.

The exemplary system shown in figure 5 could instead be configured for a different type of goods other than fluid.

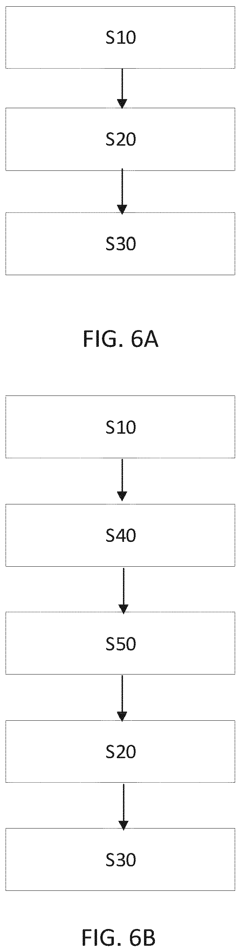

**Figure 6A** is a flow chart of a method of controlling a truck engine, which is configured to supply power to a pump 3 in a dispensing system. A pump sensor 5 is installed in, at or near the pump 3 and is configured to measure a pump sensor data parameter and to provide a pump sensor signal in response thereto.

In the method step S10 one or more sensor signals from at least one sensor are received.

In the method step S20, a first determination, based at least on the one or more sensor signals received from the at least one sensor, whether one or more predetermined criteria for the on/off status of the truck engine are fulfilled, is made.

In method step S30 the truck engine is regulated according to the first determination based at least on the received sensor signals, e.g. starting the engine, turning off the engine, or letting the engine stay turned on or off, depending on its initial power status.

In some embodiments, as shown in **figure 6B****,** a second determination, in the method step S40, based at least on the one or more sensor signals received from the at least one sensor, whether one or more predetermined criteria for the on/off status of the fluid transfer pump are fulfilled, is made.

In method step S50 the fluid transfer pump is regulated according to the second determination based at least on the received sensor signals, e.g. starting or stopping pumping, increasing or decreasing pumping power, and/or reversing pumping action. For example, if the control system determines that the flow of goods at a first conduit measurement position is diminishing, the pumping power could be reduced, and possibly the pump may even be stopped.

The method of controlling a truck engine may be implemented using a control system 1 configured as described in exemplary embodiments with reference to figures 1-5.

As described herein, the control system may also use further data in its determinations such as, but not limited to, data from further sensors and information about the truck or components installed on the chassis.

The control system could, in a further method step, provide a notification to a user and/or a user interface about the results of measurements from any sensor(s) connected to it such as e.g. a status of the pump or amount of goods measured at any of the conduit measurement points, and/or any other information the control system 1 may have.

### LIST OF REFERENCE NUMBERS

- 1: Control system
- 2: Truck engine
- 3: Pump
- 5: Pump sensor
- 6: Conduit system
- 7: First conduit sensor
- 9: Engine sensor
- 11: Gearbox sensor
- 13: Gearbox
- 15: Environmental sensor
- 17: First conduit opening
- 19: Second conduit opening
- 21: Tank
- 23: First conduit measurement position
- 25: Power connection
- 27: Control communication link
- 29: Sensor communication link
- 31: Valves
- 33: Compartments
- 35: Gauge
- 37: Secondary connection point
- 39: Arrow denoting the vertical direction
- 41: Second conduit sensor
- 43: Second measurement position
- 45: User interface
- 47: GUI communication link

## Claims

1. **A control system** (1) for a truck, the control system (1) being configured to regulate a truck engine (2), which is configured to supply power to a pump (3) in a dispensing system, the control system (1) being further configured to:
- receiving one or more sensor signals from at least one sensor (5, 7, 9, 11, 15),
- making a first determination, based at least on the one or more sensor signals received from at least one sensor (5, 7, 9, 11, 15), whether one or more predetermined criteria for the on/off status of the truck engine (2) are fulfilled, and
- regulating the truck engine (2) according to the first determination based at least on the received sensor signals,
wherein the one or more sensor signals comprises a pump sensor signal received from a pump sensor (5) installed in, at or near the pump (3), the pump sensor (5) being configured to measure a pump sensor data parameter and to provide a pump sensor signal in response thereto.

2. A control system (1) for a truck according to claim 1, wherein the truck engine (2) is further configured to supply power to a vane pump (3), and the control system (1) is further configured to receive the pump sensor signal from a pump sensor (5) configured to measure a pump sensor data parameter from a vane pump (3).

3. A control system (1) for a truck according to any of the prevous claims, wherein the control system (1) is further configured to receive the pump sensor signal from a pump sensor (5) configured to measure a pump sensor data parameter from a fluid-transfer pump (3), and/or wherein the control system (1) is further configured to receive the pump sensor signal from a pump sensor (5) configured to measure a pump sensor data parameter from an air compressor (3).

4. A control system (1) for a truck according to any of the previous claims, wherein the one or more sensor signals further comprises a truck engine sensor signal received from an engine sensor (9) installed in, at or near the truck engine (2), the engine sensor (9) being configured to measure a truck engine data parameter and to provide a truck engine sensor signal in response thereto, and/or
wherein the one or more sensor signals further comprises a gearbox sensor signal received from a gearbox sensor (11) installed in, at or near the gearbox, the gearbox sensor (11) being configured to measure a gearbox data parameter and to provide a gearbox sensor signal in response thereto.

5. A control system (1) for a truck according to any of the previous claims, wherein the one or more sensor signals further comprises sensor signals received from one or more sensors configured to measure one or more of: engine on/off status, engine RPMs, engine control system status, engine temperature, gearbox status, air supply pressure, battery voltage of the truck battery, ambient temperature, and/or flow of goods within the dispensing system.

6. A control system (1) according to any of the previous claims, wherein the dispensing system further comprises a conduit system (6) configured to transport goods between a first conduit opening (17) and a second conduit opening (19), the first conduit opening (17) being configured to connect to a tank, which is configured to hold the goods (21), the pump (3) being connected to the conduit system (6) and configured to pump the goods between the first and second conduit openings (17, 19), wherein the one or more sensor signals further comprises a first conduit sensor signal from a first conduit sensor (7) configured to measure a first conduit data parameter and to provide a first conduit sensor signal in response thereto, and
wherein the first conduit data parameter is measured at a first conduit measurement position (23) downstream from the first conduit opening (17) and upstream from the transfer pump (3), and wherein the control system (1) is further configured to interpret the first conduit data to arrive at a measure of the presence of and/or amount of goods present in the conduit system (6) at the first conduit measurement position (23).

7. A control system (1) according to any of the previous claims, wherein the control system (1) is further configured to:
- making a second determination, based at least on the one or more sensor signals received from at least one sensor (5, 7, 9, 11, 15), whether one or more predetermined criteria for the on/off status of the pump (3) are fulfilled, and
- regulating the pump (3) according to the second determination based at least on the received sensor signals.

8. **A truck** comprising a truck engine (2) configured to supply power to a pump (3) in a dispensing system, wherein the truck further comprises the control system according to any of claims 1-7.

9. **A method** of controlling a truck engine (2) configured to supply power to a pump (3) in a dispensing system comprising a pump sensor (5) installed in, at or near the pump (3), the pump sensor (5) being configured to measure a pump sensor data parameter and to provide a pump sensor signal in response thereto, the method comprising:
- receiving one or more sensor signals from at least one sensor (5, 7, 9, 11, 15),
- making a first determination, based at least on the one or more sensor signals received from the at least one sensor (5, 7, 9, 11, 15), whether one or more predetermined criteria for the on/off status of the truck engine (2) are fulfilled, and
- regulating the truck engine (2) according to the first determination based at least on the received sensor signals,
wherein the one or more sensor signals comprises the pump sensor signal.

10. A method of controlling a truck engine (2) according to claim 9, wherein the pump (3) is a vane pump.

11. A method of controlling a truck engine (2) according any of claims 9-10, wherein the pump (3) is a fluid-transfer pump, or wherein the pump (3) is an air compressor.

12. A method of controlling a truck engine (2) according to any of claims 9-11, wherein the one or more sensor signals further comprises a truck engine sensor signal received from an engine sensor (9) installed in, at or near the truck engine (2), the engine sensor (9) being configured to measure a truck engine data parameter and to provide a truck engine sensor signal in response thereto and/or
wherein the one or more sensor signals further comprises a gearbox sensor signal received from a gearbox sensor (11) installed in, at or near the gearbox, the gearbox sensor (11) being configured to measure a gearbox data parameter and to provide a gearbox sensor signal in response thereto.

13. A method of controlling a truck engine (2) according to any of claims 9-12, wherein the one or more sensor signals further comprises sensor signals received from one or more sensors configured to measure one or more of: engine on/off status, engine RPMs, engine control system status, engine temperature, gearbox status, air supply pressure, battery voltage of the truck battery, ambient temperature, and/or flow of a substance within the dispensing system.

14. A method of controlling a truck engine (2) according to any of claims 9-13, wherein the dispensing system further comprises a conduit system (6) being configured to transport goods between a first conduit opening (17) and a second conduit opening (19), the first conduit opening (17) being configured to connect to a tank (21), which is configured to hold the goods, the pump (3) being connected to the conduit system (6) and configured to pump the goods between the first and second conduit openings (17, 19),
wherein the one or more sensor signals further comprises a first conduit sensor signal from a first conduit sensor (7) configured to measure a first conduit data parameter and to provide a first conduit sensor signal in response thereto, and wherein the first conduit data parameter is measured at a first conduit measurement position (23) downstream from the first conduit opening (17) and upstream from the pump (3), and wherein the first conduit data can be interpreted to provide a measure of the presence of and/or amount of goods present in the conduit system (6) at the first conduit measurement position (23).

15. A method of controlling a truck engine (2) according to any of claims 9-14, wherein the method further comprises:
- making a second determination, based at least on the one or more sensor signals received from at least one sensor (5, 7, 9, 11, 15), whether one or more predetermined criteria for the on/off status of the pump (3) are fulfilled, and
- regulating the pump (3) according to the second determination based at least on the received sensor signals.
